# EUROPEAN PATENT APPLICATION

(11) **EP 4 745 699 A1**
(43) Date of publication of application: **20.05.2026**
(21) Application number: 25211541.5
(22) Date of filing: 28.10.2025
(51) Int. Cl.: G05B 23/02

(54) **POWER SYSTEM COMPONENT ASSESSMENT**

(30) Priority: 15.11.2024 SE 2451149
(71) Applicant: Volvo Penta Corporation, 405 08 Göteborg (SE)
(72) Inventor: GUO, Ning, VÄSTRA FRÖLUNDA (SE); JANSSON, Erik, GÖTEBORG (SE); JOHANSSON, Mattias, ALINGSÅS (SE); LINDGREN, Ronny, ASKIM (SE); NYMAN, Andreas, LERUM (SE); SJÖBLOM, Jonas, VÄNERSBORG (SE)
(74) Representative: Ström & Gulliksson AB

(57) **Abstract**

A computer system (100; 400) for assessing a power system component (10), the computer system (100; 400) comprising processing circuitry (102; 402) configured to: receive time series data (30) from a sensor (12) monitoring the power system component (10); preprocess said time series data (30); extract a plurality of features (32) from the preprocessed time series data (30); employ a statistical testing method (34) to said plurality of features (32) to determine respective statistical significance (36) of said features (32); feed one or more of said features (32) having a statistical significance (36) above a predetermined limit value (38) into a machine learning model (40); quantifying contributions of predicted outputs (42) from the machine learning model (40); and repeating the extracting, employing, feeding and quantifying until criteria is met to obtain an assessment (50) of said power system component (10).

## Description

### TECHNICAL FIELD

The disclosure relates generally to control methods for power system components. In particular aspects, the disclosure relates to power system component assessment. The disclosure can be applied to heavy-duty vehicles, such as trucks, buses, watercrafts, and construction equipment, among other vehicle types. The disclosure can also be applied to other areas of application, such as industrial applications, mobile applications, generator set, stationary applications, among other areas of application. Although the disclosure may be described with respect to a particular vehicle or area of application, the disclosure is not restricted to any particular vehicle or area of application.

### BACKGROUND

Assessing power system components is often sought to enhance performance and ensure regulatory compliance, among other objectives. While current systems can offer some insights, they struggle to capture the intricate differences between various data content, primarily due to the complexity and cost of securing precise distinguishing metrics. For instance, fuel types like diesel and biofuels share many overlapping characteristics. Current solutions either demand computationally intensive hardware and software systems or lack the specificity needed for reliable assessments of power system components which may be used for enhancing decision-making.

### SUMMARY

In a first aspect of this disclosure there is provided a computer system for assessing a power system component, the computer system comprising processing circuitry configured to: receive time series data from a sensor monitoring the power system component; preprocess said time series data; extract a plurality of features from the preprocessed time series data; employ a statistical testing method to said plurality of features to determine respective statistical significance of said features; feed one or more of said features having a statistical significance above a predetermined limit value into a machine learning model; quantify contributions of predicted outputs from the machine learning model; perform at least one re-iteration process until one or more predetermined criteria are met, the re-iteration process comprising: (i) extracting a plurality of features from the predicted outputs, (ii) employing the statistical testing method to said plurality of features from the predicted outputs, (iii) feeding one or more of said features of the predicted outputs having a statistical significance above a predetermined limit value into the machine learning model, and (iv) quantifying contributions of predicted outputs from the machine learning model; and obtain an assessment of said power system component based on the predicted outputs in response to said predetermined criteria being met.

The assessment may be one of (i) a detection of a deviation of a functionality of said power system component from a baseline functionality, or (ii) a determination of a calibration status of said power system component. The processing circuitry may be further configured to use the assessment to initiate one of a predictive maintenance action for the power system component, or a recalibration of the power system component.

The first aspect of the disclosure may seek to solve the problem of efficiently and accurately assessing power system components using readily available sensor data. A technical benefit may include providing a computationally efficient and interpretable assessment method that leverages existing data and offers insights into the physical and chemical processes of power system components, unlike "black box" approaches in the prior art.

Optionally in some examples, including in at least one preferred example, the processing circuitry is configured to quantify the contributions of the predicted outputs by defining one of a regression problem, a clustering problem, or a classification problem based on said predicted outputs, and solve said regression problem, clustering problem, or classification problem to obtain the assessment. A technical benefit may include enhanced flexibility in model selection, allowing for tailored assessments based on the nature of the data and desired outcomes.

Optionally in some examples, including in at least one preferred example, the time series data pertain to the power system component being an internal combustion engine, wherein the assessment is a fuel property determination of a fuel consumed by said internal combustion engine. A technical benefit may include improved fuel efficiency and emissions management through precise identification of fuel properties.

Optionally in some examples, including in at least one preferred example, the fuel property determination comprises a fuel composition of said fuel. A technical benefit may include providing an accurate identification of fuel compositions, leading to fuel efficiency and emissions management.

Optionally in some examples, including in at least one preferred example, the time series data comprises rotational engine speed data. A technical benefit may include enhanced predictive maintenance capabilities by utilizing engine performance metrics.

Optionally in some examples, including in at least one preferred example, the assessment is a detection of a deviation of a functionality of said power system component from a baseline functionality. A technical benefit may include early detection of potential issues, reducing downtime and maintenance costs.

Optionally in some examples, including in at least one preferred example, the assessment is a determination of a calibration status of said power system component. A technical benefit may include ensuring desirable performance and accuracy of power system components through timely recalibrations.

Optionally in some examples, including in at least one preferred example, the processing circuitry is configured to preprocess the time series data by segmenting the time series data into a plurality of data chunks to increase sample availability; and downsampling the data chunks to a selected frequency. A technical benefit may include efficient data handling and reduced computational load while maintaining data integrity.

Optionally in some examples, including in at least one preferred example, the statistical testing method employed involves a combination of the Mann-Whitney U test and the Benjamini-Hochberg procedure. A technical benefit may include robust feature selection and a control of false discovery rates in hypothesis testing.

Optionally in some examples, including in at least one preferred example, the predefined criteria involve a combination of a cost and a gain. A technical benefit may include improving resource allocation by balancing computational and financial costs with the achievement of desired model performance, thereby enhancing the efficiency and effectiveness of the assessment process.

Optionally in some examples, including in at least one preferred example, the processing circuitry is further configured to receive an operational state of a power system where the power system component is arranged. A technical benefit may include contextual insights into component performance, improving the accuracy of assessment.

In a second aspect of this disclosure there is provided a power system comprising the computer system of the first aspect.

The second aspect of the disclosure may seek to solve the problem of efficiently and accurately assessing power system components using readily available sensor data. A technical benefit may include providing a computationally efficient and interpretable assessment method that leverages existing data and offers insights into the physical and chemical processes of power system components, unlike "black box" approaches in the prior art.

In a third aspect of this disclosure there is provided a computer-implemented method for assessing a power system component, comprising: receiving, by processing circuitry of a computer system, time series data from a sensor monitoring the power system component; preprocessing, by the processing circuitry, said time series data; extracting, by the processing circuitry, a plurality of features from the preprocessed time series data; employing, by the processing circuitry, a statistical testing method to said plurality of features to determine respective statistical significance of said features; feeding, by the processing circuitry, one or more of said features having a statistical significance above a predetermined limit value into a machine learning model; quantifying, by the processing circuitry, contributions of predicted outputs from the machine learning model; performing, by the processing circuitry, at least one re-iteration process until one or more predetermined criteria are met, the performing comprising: (i) extracting a plurality of features of the predicted outputs, (ii) employing the statistical testing method to said plurality of features of the predicted outputs, (iii) feeding one or more of said features of the predicted outputs having a statistical significance above a predetermined limit value into the machine learning model, and (iv) quantifying contributions of predicted outputs from the machine learning model; and obtaining, by the processing circuitry, an assessment of said power system component based on the predicted outputs in response to said predetermined criteria being met.

The assessment may be one of (i) a detection of a deviation of a functionality of said power system component from a baseline functionality, or (ii) a determination of a calibration status of said power system component. The processing circuitry may be further configured to use the assessment to initiate one of a predictive maintenance action for the power system component, or a recalibration of the power system component.

The third aspect of the disclosure may seek to solve the problem of efficiently and accurately assessing power system components using readily available sensor data. A technical benefit may include providing a computationally efficient and interpretable assessment method that leverages existing data and offers insights into the physical and chemical processes of power system components, unlike "black box" approaches in the prior art.

Optionally in some examples, including in at least one preferred example, quantifying the contributions comprises defining one of a regression problem, a clustering problem, or a classification problem based on said predicted outputs, and solve said regression problem, clustering problem, or classification problem to obtain the assessment. A technical benefit may include enhanced flexibility in model selection, allowing for tailored assessments based on the nature of the data and desired outcomes.

Optionally in some examples, including in at least one preferred example, the time series data pertain to the power system component being an internal combustion engine, wherein the assessment is a fuel property determination of a fuel consumed by said internal combustion engine. A technical benefit may include improved fuel efficiency and emissions management through precise identification of fuel properties.

Optionally in some examples, including in at least one preferred example, the fuel type determination comprises a fuel composition of said fuel. A technical benefit may include optimized combustion processes and reduced engine wear by accurately identifying fuel compositions.

Optionally in some examples, including in at least one preferred example, the time series data comprises rotational engine speed data. A technical benefit may include enhanced predictive maintenance capabilities by utilizing detailed engine performance metrics.

In a fourth aspect of this disclosure there is provided a computer program product comprising program code for performing, when executed by the processing circuitry, the method of the third aspect.

The fourth aspect of the disclosure may seek to enable new power systems and/or legacy power systems to be conveniently configured, by software installation/update, to efficiently and accurately assess power system components using readily available sensor data. A technical benefit may include providing a computationally efficient and interpretable assessment method that leverages existing data and offers insights into the physical and chemical processes of power system components, unlike "black box" approaches in the prior art.

In a fifth aspect of this disclosure there is provided a non-transitory computer-readable storage medium comprising instructions, which when executed by the processing circuitry, cause the processing circuitry to perform the method of the third aspect.

The fifth aspect of the disclosure may seek to enable new power systems and/or legacy power systems to be conveniently configured, by software installation/update, to efficiently and accurately assess power system components using readily available sensor data. A technical benefit may include providing a computationally efficient and interpretable assessment method that leverages existing data and offers insights into the physical and chemical processes of power system components, unlike "black box" approaches in the prior art.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** illustrates a schematic view of an example power system equipped with a computer system according to an example.
**FIG. 2** shows a flowchart detailing an example process of data handling, from receiving time series data to obtaining an assessment of a power system component, according to an example.
**FIG. 3** shows a computer-implemented method for assessing a power system component.
**FIG. 4** is a schematic diagram of a computer system for implementing examples disclosed herein.

Like reference numerals refer to like elements throughout the description.

### DETAILED DESCRIPTION

The detailed description set forth below provides information and examples of the disclosed technology with sufficient detail to enable those skilled in the art to practice the disclosure.

The present disclosure seeks to address the limitations of current systems by leveraging advanced approaches for the assessment of power system components. Time series data are obtained from existing sensors that monitor a power system component, allowing for continuous and detailed data collection. This data is preprocessed and a plurality of features is extracted to identify relevant patterns and attributes that may be overlooked by conventional methods. Statistical testing methods are employed to determine the statistical significance of these features, ensuring that only the most impactful features are selected. These statistically significant features are fed into a machine learning model, enabling efficient differentiation between complex and overlapping characteristics, such as those found in different fuel types. The contributions of predicted outputs are quantified, and a re-iteration process is introduced, where the steps of feature extraction, statistical testing, and model feeding are repeated with increasingly refined features and outputs until predetermined criteria are met. This iterative approach allows for continuous improvement and refinement of the assessment, providing a technically advanced solution that addresses the challenges of current methods. These approaches reduce the need for computationally intensive resources and sensor arrangements while maintaining specificity, ultimately enabling reliable assessments that enhance decision-making processes.

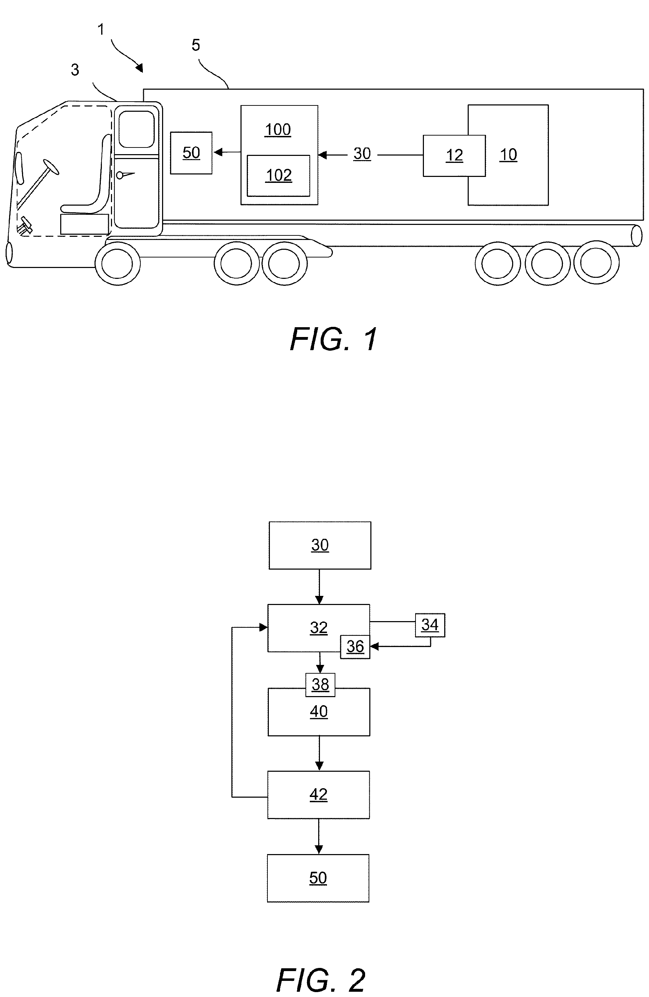

**FIG. 1** is an exemplary schematic illustration of a heavy-duty vehicle, here comprising a truck **3** and a trailer **5,** serving as an exemplary power system **1** within the context of the present disclosure. The heavy-duty vehicle represents just one of the many potential applications for approaches described herein. Beyond heavy-duty vehicles, the disclosure is applicable to a wide array of power systems **1** across various types of vehicles and applications, including but not limited to buses, watercrafts, construction equipment, agricultural machinery, industrial applications such as manufacturing plants, mobile applications such as portable power units and remote monitoring systems, generator sets, stationary applications such as power plants and HVAC systems, wind turbines, solar farms, and the like.

The power system **1** as depicted comprises one or more power system components **10,** which can encompass a broad range of elements within the power system **1** that are capable of being assessed. The power system components **10** are integral to the functioning and efficiency of the power system **1,** and assessments thereof are carried out for purposes of, for example, performance optimization, predictive maintenance, regulatory standard compliance, quality control, and the like.

In contexts of power systems **1,** an "assessment" refers to the evaluation and analysis of various components and operational parameters to determine their condition, performance, and efficiency. This generally involves obtaining sensor data, processing the sensor data, and identifying patterns, anomalies, and/or potential issues that may affect the functionality of the power system component **10,** and possibly the power system **1** as a whole. The assessment aims to provide insights into the health of the power system components **10,** forecast potential failures, and suggest maintenance or optimization actions to enhance performance and/or ensure compliance with regulatory standards. The assessment may encompass qualitative and/or quantitative analyses, and involves employing techniques such as statistical testing, feature extraction, and machine learning to derive actionable conclusions that inform decision-making processes and support the efficient and reliable operation of the power system **1.**

The power system component **10** may be an internal combustion engine (ICE), which is central to converting fuel into mechanical energy. The ICE's performance, fuel efficiency, and emissions output can be assessment areas. Other exemplary power system components **10** include transmission systems, fuel systems, electrical components, cooling systems, exhaust systems, hydraulic systems, control systems and sensors, auxiliary systems, and the like.

The power system **1** integrates one or more sensors **12** configured to retrieve real-time data **30,** or time series data **30,** on various operational aspects of the power system component **10.** This disclosure advantageously leverages existing sensors **12** to enhance data analysis without necessitating additional sensor installations, thus maintaining cost-effectiveness and ease of implementation. Examples of such sensors **12** vary depending on what type of power system component **10** it is designed to monitor. For ICE's, the sensor **12** may be a rotational engine speed sensor configured capture data on rotational speed of the ICE. Other sensors **12** may include temperature sensors that monitor thermal conditions, and pressure sensors that gauge fluid or air pressure within the system, vibration sensors for detecting mechanical imbalances, acoustic sensors for monitoring noise levels, oxygen sensors for measuring exhaust gas composition, mass airflow sensors for assessing intake air quantity, knock sensors for detecting engine knocking, fuel level sensors for gauging fuel quantity, throttle position sensors for monitoring throttle valve position, lambda sensors for evaluating air-fuel mixture ratios, and the like.

A computer system **100** involving processing circuitry **102** is configured to process the time series data **30** retrieved by the sensors **12** to extract valuable insights and detect patterns or anomalies that are used for deriving the performance and health of the power system component **10** under assessment. The time series data **30** refers to a sequence of data points. These could be collected or recorded at successive, evenly spaced points in time, providing a continuous stream of information that reflects changes in specific parameters over time. Alternatively, the data stream does not need to be continuous. Downsampling can yield a continuous stream based on the time series data **30,** even if the initial data stream is non-continuous (for example due to a non-calibrated sensor). To this end, the time series data **30** allows for a more thorough understanding of dynamics of the power system component **10,** the power system **1,** and/or related systems in operative communication with said power system **1** and/or power system component **10,** all while utilizing the existing sensor infrastructure. Ultimately, the assessment **50** of the power system component **10** is obtained based on the time series data **30** and various computational steps.

In some examples, the assessment **50** identifies deviations in the functionality of a power system component **10** from its established baseline functionality. This baseline represents the normal operating conditions and performance metrics that the component should exhibit under standard circumstances. By continuously monitoring and analyzing time series data **30** from the power system component **10,** the computer system **100** can detect anomalies or deviations that indicate potential issues, such as wear, damage, or malfunction. For instance, if an ICE's rotational speed data shows irregular fluctuations beyond the expected range or pattern, it may signal a problem with the performance of the ICE, prompting further investigation or maintenance. This type of assessment **50** is used for predictive maintenance, enabling early detection of problems and reducing downtime by addressing issues before they lead to failure.

In some examples, the assessment **50** identifies a calibration status of the power system component **10.** Calibration involves adjusting the component to ensure its output matches a standard or expected value, maintaining accuracy and reliability in its operation. By analyzing the time series data **30** of the power system component **10,** the computer system **100** can determine whether it remains within acceptable calibration parameters or if recalibration is necessary. For example, if a sensor **12** within the power system **1** is providing data that consistently deviates from known standards, the assessment may reveal that the sensor **12** has drifted out of calibration. This assessment **50** can allow for timely recalibration, which may be important in power systems **1** where precision pertains to overall performance and safety.

While an assessment **50** can in practice be established for any power system component **10,** as discussed above, it should be noted that this disclosure finds a particular usage area in the context of determining a fuel property of a fuel consumed by a power system component **10** being an ICE. The fuel property determination can involve determining a type and/or a fuel composition of the fuel consumed. The transition from traditional diesel to biofuels like hydrotreated vegetable oil (HVO) is driven by environmental considerations and the need for more sustainable fuel options. ICE manufacturers want to offer flexibility in fuel choice, not imposing strict mandates on fuel type. However, accurately determining fuel properties of fuels used in ICEs is of interest for several reasons, pertaining to emission assessments, regulatory compliance, maintenance needs and costs, and improving fuel supply chain management by predicting demand and improving logistics. Differentiating closely related substances like biofuels and diesel is challenging due to their similarity, which is a practical advantage but complicates their distinction. Current sensors and electronic control units (ECUs) may not capture the necessary data to distinguish fuels effectively. Moreover, computationally intensive machine learning models are difficult to deploy in real-time industrial environments. Interpreting these models in relation to their physical and chemical significance poses another challenge.

To address these issues, approaches described herein utilizes a dual methodology combining time series feature extraction and automated machine learning (AutoML). This approach leverages the time series data **30** collected by sensors **12** to deploy simpler, less resource-intensive models, providing robust and interpretable predictions, in line with Industry 4.0 advancements. In examples herein, fuel properties can be established based on processed rotational speed data, although it shall be understood that other sensor-retrieved time series data **30** may be used for assessing other power system components **10.** Approaches employed by the computer system **100** will now be explained in detail with further reference to **FIG. 2****.**

**FIG. 2** shows a flowchart detailing an example process of data handling, from receiving time series data **30** to obtaining an assessment **50** of a power system component **10.** Actions involved in this example process may be carried out under control by the processing circuitry **102** of the computer system **100.**

The first action is to receive the time series data **30** from the sensors **12** monitoring the power system component **10.** As discussed above, the time series data **30** provides a temporal sequence of measurements that reflect the dynamic behavior of the power system component **10** over time.

An optional action may be to also receive information regarding the operational state of the power system **1** where the power system component **10** is arranged. The operational state can offer contextual information that aids in interpreting the time series data **30** more accurately. For instance, in the case of an ICE, the operational state may include parameters such as rail pressure, timing of start of fuel injection, load conditions, throttle position, or engine temperature. For a transmission system, it might encompass the current gear selection or torque output. In the context of a generator set, the operational state could refer to the power output level or frequency stability. Receiving these operational state information allows for a deeper understanding of the conditions under which the time series data **30** was collected, thereby potentially enhancing the accuracy and relevance of the subsequent assessment of the power system component **10.**

The next action is to preprocess the time series data **30.** In the preprocessing stage, time series data **30** undergoes segmentation into smaller, manageable data chunks, and downsampling these data chunks to a selected frequency. This is to enhance the number of samples available for machine learning tasks such as training, validation, and testing. This has shown to be particularly important when dealing with data from an internal combustion engine (ICE), where engine speed rotation data must be carefully segmented to maintain the integrity of combustion revolutions while ensuring ample sample size.

In example experiments conducted for engine speed rotational data of an ICE, raw data collected at a high frequency of 200 kHz was downsampled to lower frequencies. The frequencies 10 kHz, 1 kHz, and 100 Hz were tested to explore the impact of sampling frequency on model performance. In the conducted tests, the 10 kHz data retained most features of the raw data, including small variations and a number of distinct peaks. However, at a reduced frequency of 1 kHz, these peaks became indistinct, although some regular small variations persisted. Further downsampling to 100 Hz resulted in significant smoothing of variations in the data. Based on these findings, a controlled downsampling factor was selected appropriately (in this case a factor of 20). The controlled downsampling factor provided a sufficient representation of the raw data's characteristics, without increasing computational demands or limiting the applicability of results derived from raw data. The raw time series data **30** is accordingly downsampled to be manageable within the constraints of existing sensor technology and computational resources.

In view of the above, the processing circuitry **102** may be configured to downsample the raw time series data **30** with one or more preselected downsampling factors. These factors may be adjusted based on outcomes of studying results from a first preselected downsampling factor. This may be done automatically in response to feedback results.

The next action is to extract a plurality of features **32** from the preprocessed time series data **30.** This process involves feature engineering, which is used for aligning data with the selected machine learning models, particularly in classification of preprocessed time series data **30.** Various other approaches exist in the art for feature extraction, such as Distance-based methods (e.g. Dynamic Time Warping (DTW)), shapelet-based approaches, or deep learning techniques (e.g. CNN/RNN). However, all of these are computationally demanding and require large datasets, as well as often producing "black box" models, complicating interpretation. Hence, the feature-based methodology is adopted for its interpretability, efficiency with smaller datasets, and flexibility in feature selection.

Generally, the feature-based methodology involves extracting a plurality of features **32.** This approach is advantageous when computational resources and data availability are limited, while high interoperability is necessary. The Time Series Feature Extraction on the basis of Scalable Hypothesis Tests (tsfresh) may be employed to automate the feature extraction process, calculating and evaluating hundreds of time series characteristics or features. These characteristics or features may include a number of peaks, maximum values, and autocorrelation, among others.

The tsfresh-method generates a comprehensive set of feature candidates for further processing. Some selected features calculated by the tsfresh-method include the unconditional maximum likelihood of an autoregressive process of the maximum lag (lag being the delay between data points), linear least-squares regression, the presence of a unit root in a time series sample, and autocorrelation at a given lag. Additional features include choosing a specific range on a graph and finding an average amount of change between consecutive points within that range, the complexity-invariant distance (CID) for time series, continuous wavelet transform based on the Ricker wavelet, ratio of sum of squares of a specified segment to the sum of squares of the entire time series, dividing the series into a given number of segments, Fourier coefficients from discrete Fourier transforms, and binned entropy of the power spectral density using the Welch method. Moreover, features may include mean value of central approximation of the second derivative, number of peaks at least support of specified value, partial autocorrelation at a specific lag, permutation entropy, and cross power spectral density. The above examples are not exhaustive; rather, other variations may apply.

Generally, the tsfresh-method offers three predefined methods for feature extraction: minimal, efficient, and comprehensive. The minimal method provides features for quick tests, the comprehensive method all features for in-depth analysis, and the efficient method balances feature richness with computational efficiency, excluding computationally expensive features. Either one of these may be chosen depending on various factors such as type of time series data **30,** data preprocessing methodologies used, type of power system component assessed, etc. In the particular example of the ICE, the efficient method was shown to be the most effective method as it is suitable for certain practical applications due to its ability to balance the richness of features with computational demands.

The next action is to employ a statistical testing method **34** to the extracted features **32** such that respective statistical significance **36** thereof can be determined. This may be done using a combination of the Mann-Whitney U test and the Benjamini-Hochberg procedure. Statistical significance **36** refers to the likelihood that an observed difference or relationship in the data is not due to random chance. In the context of machine learning, the Mann-Whitney U test assesses whether feature distributions differ across groups, such as binary target variables. A low p-value from this test suggests strong differentiation, making the feature a candidate for model inclusion. Its nonparametric nature is robust to non-normal data distributions, thus particularly useful for real-world datasets. Higher downsampling frequencies tend to result in lower p-values, indicating greater statistical significance **36** because they preserve more data detail. This leads to a steeper gradient in identifying significant features, enhancing model precision and reliability, thus proving more effective for predictive maintenance.

The "steeper gradient" referred to above in the text is generated by ranking the features based on their p-values obtained from the statistical testing method **34,** such as the Mann-Whitney U test. When features are ranked in ascending order of their p-values, a plot can be created where the x-axis represents the ranked features and the y-axis represents the corresponding p-values. Higher downsampling frequencies lead to more detailed data, which generally results in lower p-values for significant features. As these p-values are plotted, the line connecting them forms a gradient. A steeper gradient indicates a rapid decline in p-values among the top-ranked features, highlighting a distinction between the most and least significant features. This steepness signifies that significant features can be identified more quickly and distinctly, enhancing model precision, reliability, and effectiveness in predictive maintenance. Without ranking, the plot would not demonstrate a meaningful gradient, as the p-values would be randomly distributed.

Following the calculation of p-values, the Benjamini-Hochberg procedure can be applied to control the false discovery rate (FDR) when testing multiple hypotheses. This procedure adjusts p-values to mitigate false positives such that it can be affirmed that selected features are truly informative. The procedure involves sorting p-values, setting a predetermined limit value **38,** and rejecting null hypotheses for p-values below this limit value **38.** As downsampling frequency increases, both the number and proportion of relevant features grow, although incremental benefits diminish, suggesting a desired frequency balance.

The predetermined limit value **38** serves as a benchmark to decide which features **32** are sufficiently significant to be included in a machine learning model for further analysis. The predetermined limit value **38** can vary based on several factors, such as the specific application, the desired level of confidence, and the characteristics of the dataset being analyzed. In practice, the predetermined limit value **38** is often set as a p-value threshold, commonly at 0.05, which indicates that there is only a 5% chance that the observed differences in feature distributions are due to random variation. However, the predetermined limit value **38** can be adjusted depending on the context and requirements of the analysis. For instance, in scenarios where a higher level of certainty is needed, a more stringent predetermined limit value **38,** such as 0.01, might be applied. The choice of the predetermined limit value **38** can also depend on the trade-off between precision and recall in the model's performance. In applications where false positives are particularly costly, a lower predetermined limit value **38** might be chosen to ensure that only the most statistically significant features are selected. Conversely, in situations where missing a significant feature is more detrimental, a higher predetermined limit value **38** could be employed to capture a broader range of features.

Heuristic decisions focus on the top relevant features per downsampling frequency, as steep gradients indicate their higher relevance. Different frequencies highlight unique features; at 100 Hz, features relate to time domain patterns like trends and autocorrelation, while at 10 kHz, features focus on frequency-based information, moving beyond simple time domain analysis. Lower p-values at higher frequencies confirm earlier discussions about data detail retention. Potential feature redundancy is recognized, such as the overlap between real and imaginary parts of Fourier transform and their magnitude-angle counterparts, ensuring efficient and non-redundant feature selection for model development.

The next action is to feed features **32** having statistical significance **36** above the predetermined limit value **38** into a machine learning model **40.** This may be done by employing AutoML as a pipeline for continuous integration/delivery of one or more machine learning models **40.** AutoML alleviates the need for manually selecting and testing multiple models, thereby streamlining the process. AutoML automates the model selection and hyperparameter optimization, initially setting hyperparameters randomly and iteratively refining them to enhance model performance until a predefined threshold, such as a time limit, is reached. This results in several models trained with varying hyperparameters for each category, which are then ranked by AutoML based on their performance, negating the need for bootstrapping and allowing the training data to drive the process. By way of example, AutoML may include one or more of a decision tree, random forest, logistic regression, XGBoost, and LightGBM, and automatically choose the best model based on type of time series data **30,** extracted features **32,** power system component **10,** etc.

The next action is to obtain predicted outputs **42** from the best model provided by AutoML, such as the machine learning model **40,** and quantify contributions thereof. This may be done using SHAP (SHapley Additive exPlanations) values, which are then fed back into the feature extraction process for a reiteration of the plurality of features **32.** Accordingly, the steps discussed above (feature extraction, statistical method employment, feeding into the machine learning mode, and quantifying contributions) will be repeated one or more times, with the difference that these calculations are each time based on updated features. Hence, in each iteration, calculations are made from the previous iteration. The calculations will thus the first time be done based on the preprocessed time series data **30,** and each additional time based on quantified contributions of predicted outputs **42.**

The re-iteration process will be performed one or more times, until one or more predetermined criteria are met. The criteria may involve a combination of cost and gain. The cost considers the computational and/or human resource costs in terms of time and money. This involves conducting an assessment of the resources required to continue the iteration process, including for example the computational power and time needed to train and evaluate the model **40,** as well as the financial implications of continuing the process. The gain relates to model performance, encompassing various metrics such as accuracy, F1 score, and other relevant performance indicators. The evaluation of model performance relate to objectives of the power component assessment.

The cost and gain may be weighted differently based on various factors. For instance, in scenarios where safety is a concern, the gain may be prioritized over the cost. Conversely, if the obtainment of an overall trend rather than precise accuracy is desired, cost reduction may be acceptable at the expense of lower gain.

While cost and gain are the primary considerations, other predefined criteria could potentially be envisaged, such as the significance of features, minimum variance of predicted outputs, maximum computational time limit, maximum number of iterations, and the like. These considerations can help fine-tune the balance between cost and gain, ensuring that the iteration process yields valuable and actionable insights.

The predetermined criteria may be adapted during the calculations. This may be done manually (e.g. after n number of iterations the criteria should be changed to another value), or automatically in response to a determination by the machine learning model **40.**

The SHAP values discussed above provide a unified framework by quantifying each feature's **32** contribution to the model's output **42,** based on cooperative game theory principles, specifically the Shapley value. This method decomposes the prediction to reveal how individual features influence the model's decision-making process, offering insights into the most influential features.

Quantifying contributions may involve defining and solving one of several types of machine learning problems: a regression problem, a clustering problem, or a classification problem. This flexibility allows adaptation to the nature of the predicted outputs **42** and the specific objectives of the assessment **50.**

For a regression problem, the goal is to predict continuous values. The processing circuitry **102** is configured to use the predicted outputs **42** to model relationships between extracted features **32** and a continuous target variable. This involves determining how features **32** contribute to variations in the predicted output **42** and using metrics such as Mean Squared Error (MSE) or Root Mean Squared Error (RMSE) to evaluate model performance. By iterating on these metrics, refining of feature selection and model parameters can be done to enhance prediction accuracy, ultimately leading to a more precise assessment **50** of the power system component **10.**

In a classification problem, the focus is on categorizing the predicted outputs **42** into discrete classes. The processing circuitry **102** is configured to analyze which features **32** most significantly influence the classification, using metrics like accuracy, precision, recall, or F1 score to gauge model effectiveness. By reassessing feature importance and adjusting the model based on these metrics, iterative improvements of the classification accuracy can be obtained, providing a reliable assessment of whether a power system component **10** functions as expected or requires intervention.

Clustering problems involves grouping predicted outputs **42** into clusters based on similarity, without predefined labels. The processing circuitry **102** is configured to use clustering algorithms to identify patterns or anomalies in the predicted outputs **42,** which can be indicative of underlying issues or operational states. Metrics like silhouette score or Davies-Bouldin index may be used to evaluate the quality of clustering, guiding iterative refinements.

Regardless of the problem type, the ability to specify a performance metric is the goal. These metrics provide a quantitative measure of model performance, enabling the computer system **100** to identify areas for improvement and iterate on feature selection and model tuning. This iterative process can ensure that the assessment **50** is both accurate and informative, supporting effective decision-making and predictive maintenance strategies for the power system component **10.**

In some examples, kernel SHAP is utilized for its computational efficiency while maintaining a high level of accuracy. Kernel SHAP assigns weights to each feature subset based on its size and solves a weighted linear regression problem to determine the SHAP values, minimizing loss and providing a clear explanation of model predictions. The use of SHAP values in this context may not only enhance the interpretability of the model but may also inform the feature extraction and selection process, allowing for iterative refinement and better alignment of features with the predictive goals.

The depicted feedback loop (also referred to herein as the re-iteration process), combining the statistical testing method **34** with the quantification of predicted outputs **42,** offers an advantageous way of assessing the power system component **10.** Approaches discussed above are computationally cheaper compared to more resource-intensive methods like neural networks, making it more feasible for real-time industrial applications. Additionally, the outcomes are interpretable, providing insights that relate back to the underlying physical or chemical processes, rather than presenting a "black box" artificial intelligence to decision-makers. This interpretability is used for understanding and trusting decisions of the machine learning model **40,** ultimately involving not only efficient approaches but also practical and valuable ones for decision-making processes in industrial settings.

In some examples, a method to train a machine learning model **40** is proposed. The training method may utilize the collection of time series data **30** from existing sensors **12,** as discussed above. The time series data **30** may undergo the preprocessing and feature extraction steps discussed above to extract meaningful features **32** that serve as the input for the machine learning model **40.** Since the features **32** are selected based on their statistical significance **36** (or additionally based on results based on the re-iteration), the most impactful data is used for training the machine learning model **40.**

Once the features **32** are identified, they are fed into the machine learning model **40,** which is then trained using historical data, for example representing various operational states and conditions of the power system component **10** along with historical time series data **10.** During training, different machine learning algorithms may be employed, such as logistic regression, random forests, or decision trees, depending on the specific requirements of the assessment task. The training process can involve cross-validation for parameter refinement. AutoML can be leveraged to automate this process, selecting the best algorithm and tuning hyperparameters to achieve desirable performance.

A goal of this training method is to develop a machine learning model **40** that predicts the behavior or condition of the power system component **10** based on new input data. By incorporating features that have been rigorously tested for statistical significance **36** and employing a structured training process, the trained machine learning model **40** can become a reliable tool for assessing the functionality of the power system component **10,** according to discussions herein. To this end, the trained machine learning model **40** may be used for future assessments, including solving one or more of a regression problem, a clustering problem, or a classification problem.

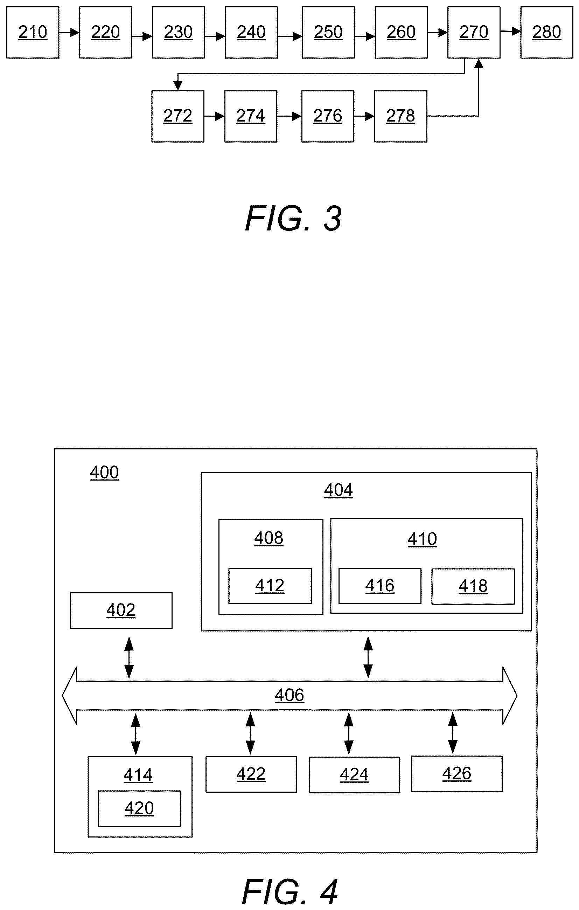

**FIG. 3** shows an exemplary computer-implemented method **200** for assessing a power system component **10.** The method **200** is carried out by processing circuitry **102** of a computer system **100.** The method comprises receiving **210** time series data **30** from a sensor **12** monitoring the power system component **10.** The method **200** comprises preprocessing **220** said time series data **30.** The method **200** comprises extracting **230** a plurality of features **32** from the preprocessed time series data **30.** The method **200** comprises employing **240** a statistical testing method **34** to said plurality of features **32** to determine respective statistical significance **36** of said features **32.** The method **200** comprises feeding **250** one or more of said features **32** having a statistical significance **36** above a predetermined limit value **38** into a machine learning model **40.** The method **200** comprises quantifying **260** contributions of predicted outputs **42** from the machine learning model. The method **200** comprises performing **270** at least one re-iteration until one or more predetermined criteria are met. The performing **270** comprises extracting **272** a plurality of features of the predicted outputs **42.** The performing **270** comprises employing **274** the statistical testing method to said plurality of features **32** of the predicted outputs **42.** The performing **270** comprises feeding **276** one or more of said features **32** of the predicted outputs **42** having a statistical significance **36** above a predetermined limit value **38** into the machine learning model **40.** The performing **270** comprises quantifying **278** contributions of predicted outputs **42** from the machine learning model **40.** The method **200** comprises obtaining **280** an assessment **50** of the power system component **10** based on the predicted outputs **42** in response to said predetermined criteria being met.

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system for assessing a power system component, the computer system comprising processing circuitry configured to: receive time series data from a sensor monitoring the power system component; preprocess said time series data; extract a plurality of features from the preprocessed time series data; employ a statistical testing method to said plurality of features to determine respective statistical significance of said features; feed one or more of said features having a statistical significance above a predetermined limit value into a machine learning model; quantify contributions of predicted outputs from the machine learning model; perform at least one re-iteration process until one or more predetermined criteria are met, the re-iteration process comprising: (i) extracting a plurality of features from the predicted outputs, (ii) employing the statistical testing method to said plurality of features from the predicted outputs, feeding one or more of said features of the predicted outputs having a statistical significance above a predetermined limit value into the machine learning model, and quantifying contributions of predicted outputs from the machine learning model; and obtain an assessment of said power system component based on the predicted outputs in response to said predetermined criteria being met.

Example 2: The computer system of Example 1, wherein the processing circuitry is configured to quantify the contributions of the predicted outputs by defining one of a regression problem, a clustering problem, or a classification problem based on said predicted outputs, and solve said regression problem, clustering problem, or classification problem to obtain the assessment.

Example 3: The computer system of any of Examples 1-2, wherein the time series data pertain to the power system component being an internal combustion engine, wherein the assessment is a fuel property determination of a fuel consumed by said internal combustion engine.

Example 4: The computer system of Example 3, wherein the fuel property determination comprises a fuel composition of said fuel.

Example 5: The computer system of any of Examples 3-4, wherein the time series data comprises rotational engine speed data.

Example 6: The computer system of any of Examples 1-5, wherein the assessment is a detection of a deviation of a functionality of said power system component from a baseline functionality.

Example 7: The computer system of any of Examples 1-5, wherein the assessment is a determination of a calibration status of said power system component.

Example 8: The computer system of any preceding example, wherein the processing circuitry is configured to preprocess the time series data by segmenting the time series data into a plurality of data chunks to increase sample availability; and downsampling the data chunks to a selected frequency.

Example 9: The computer system of any preceding example, wherein the predefined criteria involve a combination of a cost and a gain.

Example 10: The computer system of any preceding example, wherein the statistical testing method employed involves a combination of the Mann-Whitney U test and the Benjamini-Hochberg procedure.

Example 11: The computer system of any preceding example, wherein the processing circuitry is further configured to employ an automated machine learning platform as the machine learning model.

Example 12: The computer system of any preceding example, wherein the processing circuitry is further configured to quantify contributions of said predicted outputs by employing SHAP (SHapley Additive exPlanations) values.

Example 13: The computer system of any preceding example, wherein the processing circuitry is further configured to receive an operational state of a power system where the power system component is arranged.

Example 14: A power system comprising the computer system of any preceding example.

Example 15: A computer-implemented method for assessing a power system component, comprising: receiving, by processing circuitry of a computer system, time series data from a sensor monitoring the power system component; preprocessing, by the processing circuitry, said time series data; extracting, by the processing circuitry, a plurality of features from the preprocessed time series data; employing, by the processing circuitry, a statistical testing method to said plurality of features to determine respective statistical significance of said features; feeding, by the processing circuitry, one or more of said features having a statistical significance above a predetermined limit value into a machine learning model; quantifying, by the processing circuitry, contributions of predicted outputs from the machine learning model; performing at least one re-iteration process until one or more predetermined criteria are met, wherein the re-iteration process involves extracting features of the predicted outputs, employing the statistical testing method on these features, feeding significant features back into the machine learning model, and quantifying contributions of the updated predicted outputs; and obtaining an assessment of said power system component based on the predicted outputs once the predetermined criteria are satisfied.

Example 16: The method of Example 15, wherein quantifying the contributions comprises defining one of a regression problem, a clustering problem, or a classification problem based on said predicted outputs, and solve said regression problem, clustering problem, or classification problem to obtain the assessment.

Example 17: The method of any of Examples 15-16, wherein the time series data pertain to the power system component being an internal combustion engine, wherein the assessment is a fuel property determination of a fuel consumed by said internal combustion engine.

Example 18: The computer system of Example 17, wherein the fuel type determination comprises a fuel composition of said fuel.

Example 19: The computer system of any of Examples 17-18, wherein the time series data comprises rotational engine speed data.

Example 20: A computer program product comprising program code for performing, when executed by the processing circuitry, the method of any of Examples 15-19.

Example 21: A non-transitory computer-readable storage medium comprising instructions, which when executed by the processing circuitry, cause the processing circuitry to perform the method of any of Examples 15-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100; 400) for assessing a power system component (10), the computer system (100; 400) comprising processing circuitry (102; 402) configured to:
receive time series data (30) from a sensor (12) monitoring the power system component (10);
preprocess said time series data (30);
extract a plurality of features (32) from the preprocessed time series data (30);
employ a statistical testing method (34) to said plurality of features (32) to determine respective statistical significance (36) of said features (32);
feed one or more of said features (32) having a statistical significance (36) above a predetermined limit value (38) into a machine learning model (40);
quantify contributions of predicted outputs (42) from the machine learning model (40);
perform at least one re-iteration process until one or more predetermined criteria are met, the re-iteration process comprising:
(i) extracting a plurality of features (32) from the predicted outputs (42),
(ii) employing the statistical testing method (34) to said plurality of features (32) from the predicted outputs (42),
(iii) feeding one or more of said features (32) of the predicted outputs (42) having a statistical significance (36) above a predetermined limit value (38) into the machine learning model (40), and
(iv) quantifying contributions of predicted outputs (42) from the machine learning model (40);
obtain an assessment (50) of said power system component (10) based on the predicted outputs (42) in response to said predetermined criteria being met, wherein the assessment (50) is one of (i) a detection of a deviation of a functionality of said power system component (10) from a baseline functionality, or (ii) a determination of a calibration status of said power system component (10); and
use the assessment (50) to initiate one of (i) a predictive maintenance action for the power system component (10), or (ii) a recalibration of the power system component (10).

2. The computer system (100; 400) of claim 1, wherein the processing circuitry (102; 402) is configured to quantify the contributions of the predicted outputs (42) by defining one of a regression problem, a clustering problem, or a classification problem based on said predicted outputs (42), and solve said regression problem, clustering problem, or classification problem to obtain the assessment (50).

3. The computer system (100; 400) of any of claims 1-2, wherein the time series data (30) pertain to the power system component (10) being an internal combustion engine, wherein the assessment (50) is a fuel property determination of a fuel consumed by said internal combustion engine.

4. The computer system (100; 400) of claim 3, wherein the fuel property determination comprises a fuel composition of said fuel.

5. The computer system (100; 400) of any of claims 3-4, wherein the time series data (30) comprises rotational engine speed data.

6. The computer system (100; 400) of any preceding claim, wherein the processing circuitry (102; 402) is configured to preprocess the time series data (30) by:
segmenting the time series data (30) into a plurality of data chunks to increase a sample availability; and
downsampling the data chunks to a selected frequency.

7. The computer system (100; 400) of any preceding claim, wherein the predefined criteria involve a combination of a cost and a gain.

8. The computer system (100; 400) of any preceding claim, wherein the processing circuitry (102; 402) is further configured to receive an operational state of a power system (1) where the power system component (10) is arranged.

9. The computer system (100; 400) of any preceding claim, wherein the predefined criteria involve a combination of a cost and a gain.

10. The computer system (100; 400) of any preceding claim, wherein the statistical testing method employed involves a combination of the Mann-Whitney U test and the Benjamini-Hochberg procedure.

11. A power system (1) comprising the computer system (100; 400) of any preceding claim.

12. A computer-implemented method (200) for assessing a power system component (10), comprising:
receiving (210), by processing circuitry (102; 402) of a computer system (100; 400), time series data (30) from a sensor (12) monitoring the power system component (10);
preprocessing (220), by the processing circuitry (102; 402), said time series data (30);
extracting (230), by the processing circuitry (102; 402), a plurality of features (32) from the preprocessed time series data (30);
employing (240), by the processing circuitry (102; 402), a statistical testing method (34) to said plurality of features (32) to determine respective statistical significance (36) of said features (32);
feeding (250), by the processing circuitry (102; 402), one or more of said features (32) having a statistical significance (36) above a predetermined limit value (38) into a machine learning model (40);
quantifying (260), by the processing circuitry (102; 402), contributions of predicted outputs (42) from the machine learning model (40);
performing (270), by the processing circuitry (102; 402), at least one re-iteration process until one or more predetermined criteria are met, the performing (270) comprising:
(i) extracting (272) a plurality of features (32) of the predicted outputs (42),
(ii) employing (274) the statistical testing method (34) to said plurality of features (32) of the predicted outputs (42),
(iii) feeding (276) one or more of said features (32) of the predicted outputs (42) having a statistical significance (36) above a predetermined limit value (38) into the machine learning model (40), and
(iv) quantifying (278) contributions of predicted outputs (42) from the machine learning model (40); and
obtaining (280), by the processing circuitry (102; 402), an assessment (50) of said power system component (10) based on the predicted outputs (42) in response to said predetermined criteria being met, wherein the assessment (50) is one of (i) a detection of a deviation of a functionality of said power system component (10) from a baseline functionality, or (ii) a determination of a calibration status of said power system component (10); and
using the assessment (50) to initiate one of (i) a predictive maintenance action for the power system component (10), or (ii) a recalibration of the power system component (10).

13. The method (200) of claim 12, wherein quantifying (260) the contributions comprises:
defining one of a regression problem, a clustering problem, or a classification problem based on said predicted outputs (42), and
solving said regression problem, clustering problem, or classification problem to obtain the assessment (50).

14. A computer program product comprising program code for performing, when executed by the processing circuitry (102; 402), the method (200) of any of claims 12-13.

15. A non-transitory computer-readable storage medium comprising instructions, which when executed by the processing circuitry (102; 402), cause the processing circuitry (102; 402) to perform the method (200) of any of claims 12-13.
